Europäisches Patentamt

European Patent Office

Office européen des brevets

(11) Publication number : **0 325 477 B1**

# EUROPEAN PATENT SPECIFICATION

(45) Date of publication of patent specification :
**15.03.95 Bulletin 95/11**

(51) Int. Cl.⁶ : **G11B 20/12, G11B 20/10**

(21) Application number : **89300542.1**

(22) Date of filing : **20.01.89**

(54) **Methods of recording and/or reproducing digital signals.**

(30) Priority : **22.01.88 JP 12254/88**

(43) Date of publication of application :
**26.07.89 Bulletin 89/30**

(45) Publication of the grant of the patent :
**15.03.95 Bulletin 95/11**

(84) Designated Contracting States :
**CH DE FR GB LI**

(56) References cited :
**EP-A- 0 323 119
THE BKSTS JOURNAL vol. 66, no. 4, April 1984,
London, GB pages 162 - 167; J. R.WATKIN-
SON : "DASH format and the PCM-3324"**

(56) References cited :
**AN AUDIO ENGINEERING SOCIETY PREP-
RINT N 2322 (B3) March 4-7, 1986; 1986 New
York, us pages 1-9; Y. ISHIDA et al.:"A profes-
sional use 2 channel digital audio recorder
adopting an improved signal format."p.2, lines
28-33, p.4, lines 4-38; fig.2,3,5.
AN AUDIO ENGINEERING SOCIETY PREP-
RINT N. 2323(B4) March 4-7, 1986; 1986, New
York, US, p.1-14; A.Weisser et al:"Description
of anew format for digital audio tape recording
with stationary heads" p.4, line 23-p.6, line13,
p. 7, line12-35**

(73) Proprietor : **SONY CORPORATION
7-35 Kitashinagawa 6-chome
Shinagawa-ku
Tokyo 141 (JP)**

(72) Inventor : **Lagadec, Roger c/o Patents Division
c/o Sony Corporation
6-7-35 Kitashinagawa
Shinagawa-ku Tokyo 141 (JP)**

(74) Representative : **Pilch, Adam John Michael et
al
D. YOUNG & CO.,
21 New Fetter Lane
London EC4A 1DA (GB)**

EP 0 325 477 B1

## Description

This invention relates to methods of recording and/or reproducing digital signals and, in particular but not exclusively, to such methods in which multiple tracks are formed on a recording medium by stationary heads.

It is known to record digital signals, such as pulse code modulated (PCM) audio signals, by a multiple track recording method in which digital signals of one or more channels are recorded by a stationary head so as to be distributed in plural tracks formed along the longitudinal direction of a magnetic tape.

As shown, for example, in the present applicants' Japanese Patent Publications Kokai Nos. 104714/1984 and 145768/1986, PCM audio signals, obtained by quantisation into 16 bits at a sampling frequency of 32 kHz, 44.1 kHz, 48 kHz or 50.4 kHz, are selectively recorded on required ones of, for example, 8 to 48 tracks on the tape as a function of the number of channels or the tape running speed. A similar recording format having eight data tracks for 2-channel digital audio is described in AES Preprint 2323 (B4), March 4-7, 1986, pp 1-13, Weisser et al, "Description of a New Format for Digital Audio-Tape Recording with Stationary Heads". As set out in AES preprint 2323 in a recording apparatus using these PCM audio signals, there is a demand for increased dynamic range of the audio signals or increased performance in data processing. A straightforward way is to increase the word length of the recording data, so as to expand the number of quantisation bits from 16 to 20 bits. A different approach is a block ranging technique wherein the samples of a block are spread over 4 frames in 4 different sets. The use of the 16 available bits to represent the 20 input samples is defined and stored in an auxiliary word associated to each frame.

AES Preprint 2322, 1986, March 4-7 discloses a 2-channel recorder with a 12 multitrack head for recording 20 bit samples in a special mode (normal mode 16 bit), two samples forming a 40 bit word being split up into five 8-bit symbols which form the basis of error correcting blocks spread over the various tracks.

It is known from JP-A-5730108 to extend 14-bit data words of a frame to 16-bit data words by splitting up the 16-bit data words into 14-bit data words and 2-bit data words, the 2-bit data words being composed to a 14-bit data word being recorded in the Q-code word.

According to an aspect of the invention there is provided a method of recording digital sampling data words consisting of either m or m+n bits on a recording medium (MT) utilising a multi-track recording format with blocks, whose data words having $\underline{m}$ bits are distributed over the data tracks of the recording medium (MT), the method being characterised by comprising the steps of:

receiving at least one channel of digital data comprising a plurality of sampling data words each having $\underline{m} + \underline{n}$ bits;

for each said channel, dividing each said sampling data word into a standard data word (SD) of $\underline{m}$ upper order bits of said sampling data word and extension data (ED) of $\underline{n}$ lower order bits of said sampling data word; and

recording said standard data word (SD) independently on at least one track on said recording medium (MT) and said extension data (ED) being grouped in data words of n bits on at least one other track on said recording medium (MT).

According to another aspect of the invention there is provided a method of reproducing a digital signal from a recording medium (MT) recorded by a method according to any one of the preceding claims, the reproducing method comprising the steps of:

reproducing said standard data (SD) independently from at least one track on said recording medium (MT) and said extension data (ED) from at least one other track on said recording medium (MT);

combining said standard data (SD) and extension data (ED) into respective data words having $\underline{m} + \underline{n}$ bits; and

reconstituting at least one channel of said digital data comprising said sampling data words.

It is an object of the invention to handle extended data with assurance of compatibility.

A preferred embodiment of the invention, to be described in greater detail hereinafter, provides a method of recording/reproducing digital signals which is free of the aforementioned drawbacks of the previously-proposed system. Also, auxiliary data can be rewritten independently.

According to the preferred embodiment, $\underline{m}$-bit standard data and $\underline{n}$-bit expansion data constituting one-channel data are separated from each other and recorded in a distributed fashion on different recording tracks so that the $\underline{m}$-bit standard data can be expanded by the $\underline{n}$-bit expansion data and the standard and expansion data can be handled independently of each other.

The invention will now be described by way of example with reference to the accompanying drawings, throughout which like parts are referred to by like references, and in which:

Figure 1 is a diagrammatic view showing the pattern of recording tracks defined on a magnetic tape in a recording/reproducing method for digital signals.

Figures 2A and 2B are diagrammatic views showing respectively the composition of a data block on the recording tracks shown in Figure 1, and the sync signal pattern therefor;

Figure 3 is a diagrammatic view showing the manner of generating error correction words included in the data block shown in Figure 2A;

Figure 4 is a diagrammatic view illustrating the data construction for expanding audio data in the recording/reproducing method according to an embodiment of the present invention;

Figure 5 is a diagrammatic view showing the manner of track assignment of data in a recording/reproducing method for digital signals embodying the present invention;

Figure 6 is a block diagram showing a recording circuit for recording the digital signals in accordance with the track assignment shown in Figure 5;

Figure 7 is a block diagram showing a reproducing circuit for reproducing digital signals recorded by the recording circuit shown in Figure 6;

Figures 8A and 8B are block diagrams showing a modified embodiment of the recording/reproducing circuit for practising the method of recording/reproducing digital signals embodying the present invention; and

Figures 9 and 10 are diagrammatic views showing the manner of track assignment of data in a method of recording/reproducing digital signals according to a modified embodiment of the present invention.

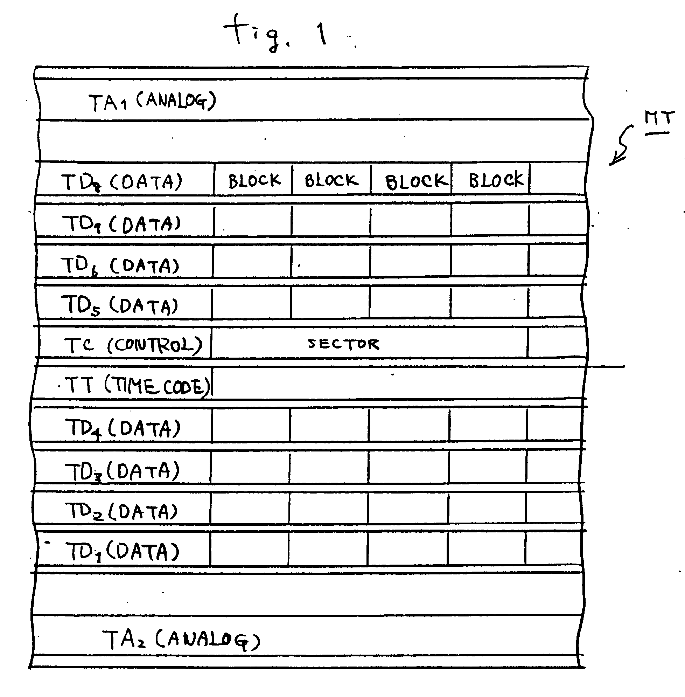

Figure 1 shows a magnetic tape MT of, for example, 1/4 inch (6.4 mm) width, on which eight digital audio signal tracks TD1 to TD8, for example, are arrayed across the tape width and extend along the tape length. On these tracks, one or a plurality of channels of PCM audio signals are recorded selectively.

At the centre of the width of the tape MT, there are formed a time code signal track TT and a control signal track TC between the digital audio signal tracks TD4 and TD5.

On the time code signal track TT, there are recorded, for example, so-called SMPTE time code signals. On the control signal track TC, address data may be recorded indicating the absolute addresses along the length of the magnetic tape MT and format identification data indicating the recording formats of the digital audio signals recorded on the digital audio signal tracks TD1 to TD8, along with sync signals, as sectors each having a predetermined period.

At both edges of the magnetic tape MT, there are defined two analog audio signal tracks TA1 and TA2, on which analog audio signals corresponding to the digital audio signals recorded on the digital audio signal tracks TD1 to TD8 are recorded with a suitable bias or as pulse width modulated (PWM) signals.

It will be noted that the time code signal track TT and the control signal track TC may be defined at an edge of the tape MT, in similar manner to the analog audio signal tracks TA1 and TA2. Since these tracks TT and TC are not relevant directly to the present invention, the corresponding description will be omitted for simplicity.

On the digital audio signal tracks TD1 to TD8 on the magnetic tape MT, digital signals formed into blocks each including a plurality of words are modulated in accordance with a predetermined rule and are recorded serially with a periodicity such that four blocks correspond to each sector of the control signal track TC.

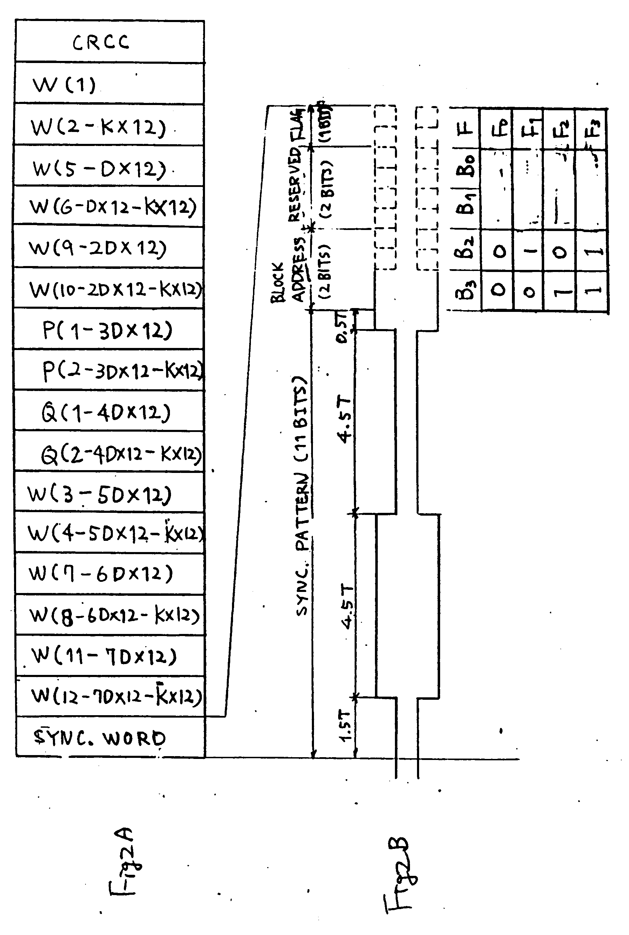

Referring to Figure 2A, each block is made up of a block sync signal, shown in more detail in Figure 2B, 16-word digital data contiguous thereto and 16-bit redundancy data of a cyclic redundancy check code (CRCC) generated from the above 16-word digital data and from a portion of the block sync signal.

As shown in Figure 2B, the block sync signal is made up of an 11-bit sync pattern having two transition distances of 4.5 T violating the modulation rule, preceded and followed by distances of 1.5 T and 0.5 T, where T represents the length of a bit cell, a block address of two bits, a reserved area of two bits and a flag bit following the sync pattern, in this order. The aforementioned address is changed so as to be repeated at intervals of four blocks and is combined with the sector address recorded in the control signal track TC to indicate the absolute addresses. The flag bit F0 in the block having the address (00) indicates whether the original analog signal of the PCM audio signal for the track is subjected to pre-emphasis or not.

The CRCC is generated from the 16-word digital data and the block address.

The 16 words of digital data included in this block are formed by 12 words of digital data and 4 words of redundancy data for error correction. Each word of the 12 words is formed by 16-bit PCM audio data, upper order bits of the 20-bit PCM audio data, or 16-bit data constituted by 4 lower order bits of the 20-bit PCM audio data and 4-bit auxiliary data, as described later in detail.

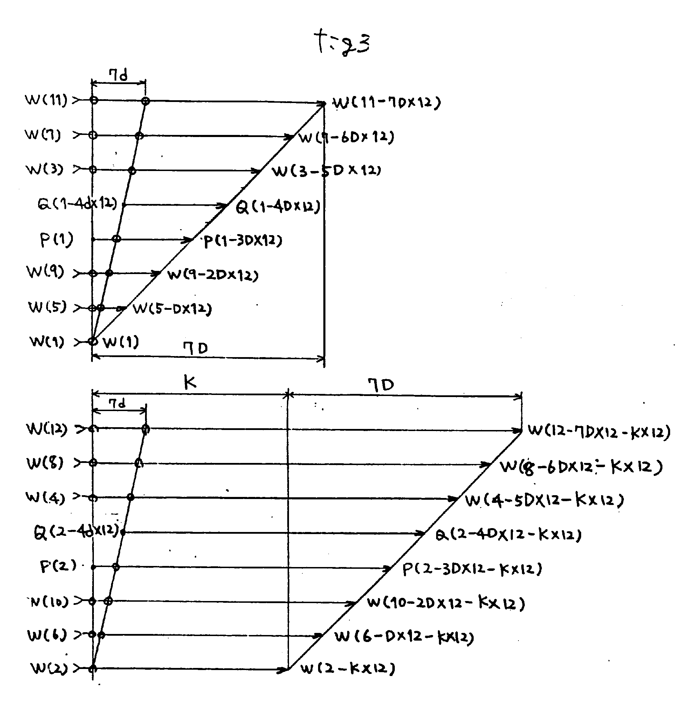

The four words of redundancy data for error correction are generated as shown in Figure 3. Thus a sequence of input digital data, with regard to one track, to an encoder for the error correction code is divided at intervals of 12 words, W(n) (n=1, 2, ..... 12) and separated into an odd-numbered word sequence and an even-numbered word sequence. A parity word P constituting a first error correction code is generated from the six words. The seven words, inclusive of the parity word P, are interleaved so that they are separated by $\underline{d}$ blocks from one another, to generate a parity word Q constituting a second error correction code. The eight words, inclusive of this parity word Q, are further interleaved so that they are separated by $\underline{D}$ blocks from one another, at the same time that the even-numbered word sequence is delayed by $\underline{k}$ blocks with respect to the odd-numbered word sequence. Thus, the digital data included in each block are formed by 16 words, as shown in Figure 2A.

The above is described in detail in the aforementioned Japanese Patent Publications Kokai Nos. 104714/1984 and 145768/1986, so that detailed description is not given herein for simplicity.

Assuming that a magnetic tape of 1/4 inch (6.4 mm) width is used as the magnetic tape MT, channel allocation to the digital audio signal tracks TD1 to TD8 of the magnetic tape MT is defined by the sampling frequency, tape running speed and the number of channels as parameters, for the sampling frequency of 48 kHz, as shown in the following Table 1.

## Table 1

| format | F | M | T | X | S |
|---|---|---|---|---|---|
| tape speed (cm/s) | 76.20 | 38.10 | 38.10 | 38.10 | 19.05 |
| number of channels | 8 | 4 | 2 | 2 | 2 |
| number of tracks occupied per channel | 1 | 2 | 4 | 2 + (2) | 4 |
| track $TD_1$ | $CH_1$ | $CH_1$-A | $CH_1$-A | $CH_1$-A | $CH_1$-A |
| track $TD_2$ | $CH_2$ | $CH_2$-A | $CH_2$-A | $CH_2$-A | $CH_2$-A |
| track $TD_3$ | $CH_3$ | $CH_3$-A | $CH_1$-A' | Extension | $CH_1$-C |
| track $TD_4$ | $CH_4$ | $CH_4$-A | $CH_2$-A' | Parity | $CH_2$-C |
| track $TD_5$ | $CH_5$ | $CH_1$-B | $CH_1$-B | $CH_1$-B | $CH_1$-B |
| track $TD_6$ | $CH_6$ | $CH_2$-B | $CH_2$-B | $CH_2$-B | $CH_2$-B |
| track $TD_7$ | $CH_7$ | $CH_3$-B | $CH_1$-B' | Extension | $CH_2$-D |
| track $TD_8$ | $CH_8$ | $CH_4$-B | $CH_2$-B' | Parity | $CH_2$-D |

Referring to Table 1, in the format F(fast), the 16-bit PCM audio signals for eight channels CH1 to CH8 are recorded each on one track, and, in the format M(medium), the 16-bit PCM audio signals for four channels CH1 to CH4 are recorded each on two tracks separated by four tracks from each other, in such a manner that these signals are distributed to these two tracks. In the format S (slow), the two channels CH1 and CH2 are recorded each on four tracks separated by two tracks from each other, in such a manner that these two channels are distributed to these four tracks. In the format T (twin), PCM audio signals for the channels CH1 and CH2 are also recorded each on tracks TD3, TD4, TD7 and TD8 on which the PCM audio signals for the channels CH3 and CH4 should be recorded in the format M. In this manner, so-called double recording is achieved.

In the recording/reproducing method according to an embodiment of the present invention, PCM audio data is recorded in a format X (extended) in which the number of bits for quantisation is expanded to, for example, 20 to 24 bits, while compatibility is maintained with respect to the pre-existing formats.

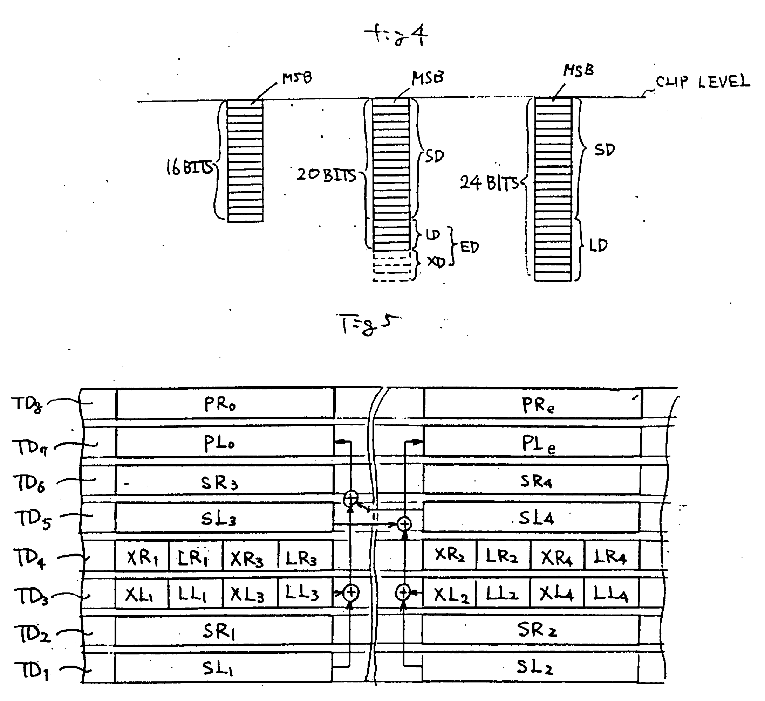

In the present embodiment, a unit data is constituted by standard data SD of $\underline{m}$ bits and expansion data ED of $\underline{n}$ bits. In the following description, and as shown in Figure 4, a unit data of 24 bits is considered where $\underline{m}$ is set to 16 and $\underline{n}$ to 8. The standard data SD is allocated to 16 upper order bits of 20-bit audio data. The 8-

4

EP 0 325 477 B1

bit expansion data ED is further allocated to expansion audio data LD forming the four lower order bits of 20-bit audio data and 4-bit auxiliary data XD so that the data unit of 24 bits is formed by 20-bit audio data (SD+LD) to which 4-bit auxiliary data XD is annexed.

When the auxiliary data XD is not required, the totality of the 8-bit expansion data ED may be used as the expansion audio data LD, for expanding the dynamic range to provide the audio data of 24 bits while the association with the 16-bit standard audio data SD is maintained with the most significant bit (MSB) of the audio data as the clip level.

In the following embodiment, 20-bit PCM audio signals of two channels, such as left and right channels of stereophonic audio signals, are considered. The PCM audio signals of 20 bits per sample are constituted by standard audio data of 16 upper order bits corresponding to the standard data SD and expansion audio data of 4 lower order bits corresponding to the expansion data LD. The unit data includes the 4-bit auxiliary data XD annexed to the above data. The data constituted in this manner is recorded in a distributed fashion on six tracks, namely the tracks TD1 to TD6, of the eight digital audio signal tracks TD1 to TD8 of the magnetic tape MT.

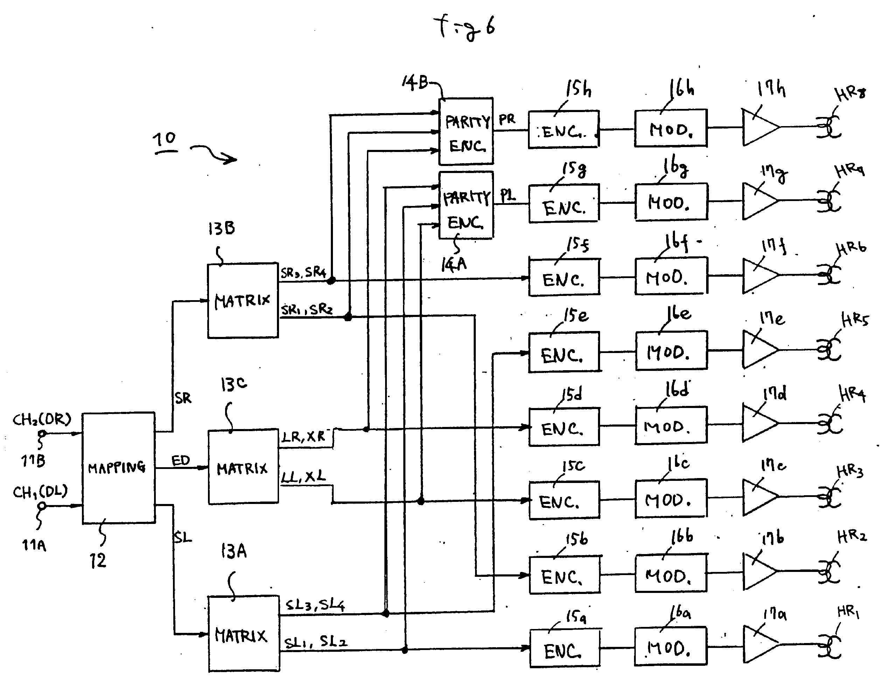

In Figure 5, only the digital audio signal tracks TD1 to TD8 of the multiple tracks shown in Figure 1 and only the continuous four samples of the PCM audio data and auxiliary data are shown.

As in the aforementioned formats M and T, the standard audio data SL of the upper order 16 bits for the left channel are recorded on digital audio signal tracks TD1 and TD5 each as one word, while the standard audio data SR of the upper order 16 bits of the right channel are recorded on digital audio signal tracks TD2 and TD6 each as one word. With the input word sequence of each channel of, for example, SL1, SL2, SL3, SL4, SL5, SL6, SL7, SL8, ..... for the left channel it is converted for the tracks TD1, TD5 into the word sequence shown in Table 2, and interleaved as shown in Figure 3. The same may apply for the digital audio signal tracks TD2 and TD6 on which the digital audio signals for the right channel are recorded. This word sequence applies for the formats M and T, where these tracks are concerned.

Table 2

| track TD1 | SL1 | SL2 | SL5 | SL6 ..... |
| track TD5 | SL3 | SL4 | SL7 | SL8 ..... |
| track TD2 | SR1 | SR2 | SR5 | SR6 ..... |
| track TD6 | SR3 | SR4 | SR7 | SR8 ..... |

The expansion audio data LL of the lower order 4 bits and the 4-bit auxiliary data XL, for the left channel from two data units, are recorded, each as one word, on the digital audio signal track TD3. Similarly, the expansion audio data LR of the 4 lower order bits and the 4-bit auxiliary data XR, for the right channel from two data units, are recorded, each as one word, on the digital audio signal track TD4. In this case, the sequence of two-unit data which are combined and the sequence of the data which are actually recorded are the same as the sequence in which the standard audio data are recorded, in such a manner that the expansion audio data LD and the auxiliary data XD of the unit data which include the standard audio data SD existing at the same timing are combined and recorded.

As shown in Figure 5, 16-bit parity data PLo is obtained from three words, that is, the standard audio data SL1 recorded on the digital audio signal track TD1, the expansion audio data LL1, LL3 and the auxiliary data XL1, XL3 recorded on the digital audio signal track TD3 and the standard audio data SL4 recorded on the digital audio signal track TD5 at different timing, and is recorded on the digital audio signal track TD7 at the timing or recording of the standard audio data SL1. Similarly, 16-bit parity data PLe is obtained from three words, that is, from the standard audio data SL2, the expansion audio data LL2, LL4, the auxiliary data XL2, XL4 and the standard audio data SL3 recorded on the digital audio signal track TD5 at different timing, and is recorded on the digital audio signal track TD7 at the timing of recording of the standard audio data SL2. As for the right channel, parity data PRo is obtained from three words, that is, the standard audio data SR1 and SR4, the ex-

5

pansion audio data LR1, LR3 and the auxiliary data XR1, XR3, and is recorded on the digital audio signal track TD8. Similarly, parity data PRe is obtained from three words, that is, the standard audio data SR2 and SR3, the expansion audio data LR2, LR4 and the auxiliary data XR2, XR4, and is recorded on the digital audio signal track TD8.

The above processing is repeated at intervals of four data units.

It should be noted that, as shown in Figure 5, the standard audio data SL1 and SL3 and the standard audio data SL2 and SL4 are recorded at a distance of K blocks from each other, since they are previously subjected to interleaving at the time of the error correction coding, as shown in Figure 3.

In this manner, a parity is generated and recorded from the data across plural tracks, so that, even when one track data cannot be reproduced due to, for example, head clogging, it can be reconstituted from the other data and the parity reproduced from the other tracks.

Also, in case a dropout has occurred across plural tracks along the tape width, as a result of splice editing, for example, the respective parity series are interleaved so that, for example, the above parity data PLo is generated from the standard audio data SL1 and SL4 and the expansion audio data LL1 and LL3, so that the number of samples of the data that may be reconstituted by correction may be increased and a higher sound quality may be maintained. The above interleaving is not mandatory, however, and may be omitted, if so desired.

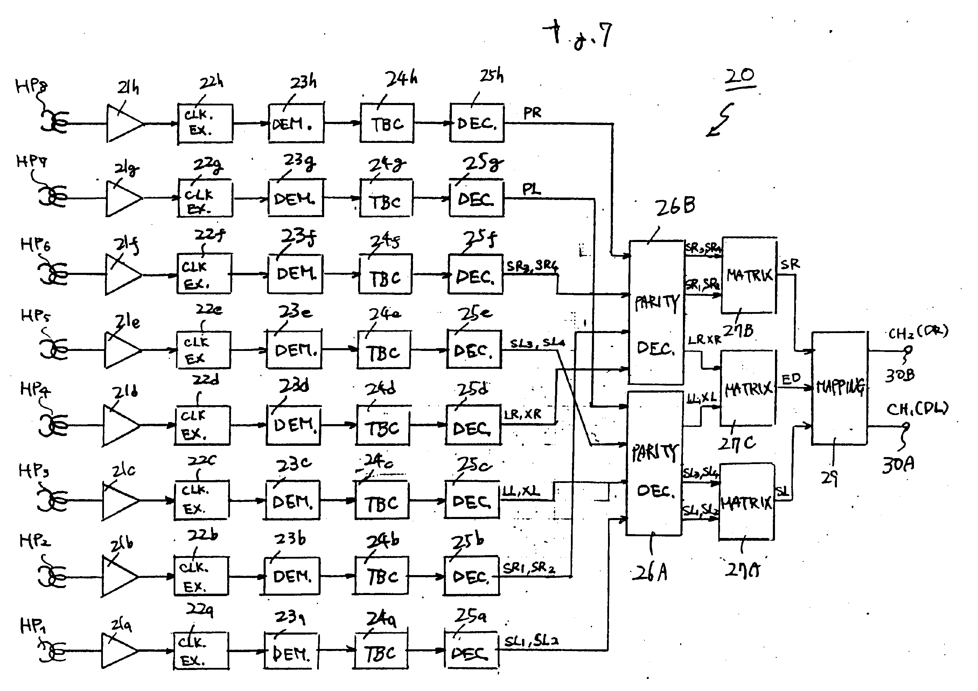

A recording/reproducing apparatus to be used in the above-described recording method will now be explained in more detail, with reference to Figures 6 and 7.

In a recording circuit 10 shown in Figure 6, data units DL and DR for the left and right channels are supplied to input terminals 11A and 11B. In a mapping circuit 12, connected to the input terminals 11A and 11B, the standard audio data SL, expansion audio data LL and the auxiliary data XL are separated from the left channel unit data DL, while the standard audio data SR, expansion audio data LR and the auxiliary data XR are separated from the right channel unit data DR. Three matrix circuits 13A, 13B and 13C are connected to the mapping circuit 12. The matrix circuit 13A is supplied with the standard audio data SL for the left channel and sequentially provides data at its two outputs in accordance with the word sequence shown in Table 2. The matrix circuit 13B is supplied with the standard audio data SR for the right channel and sequentially provides data at its two outputs in accordance with the word sequence shown in Table 2. The expansion audio data LL, LR and the auxiliary data XL, XR for the left and right channels are supplied to the matrix circuit 13C and alternately provided at its two outputs, as shown in Figure 5.

A parity encoder 14A, connected to the matrix circuits 13A and 13C, is supplied with the standard audio data SL, the expansion audio data LL and the auxiliary data XL for the left channel, and generates parity data PL from the interleaved data shown in Figure 5 by, for example, a modulo-2 addition, that is, an exclusive-OR addition.

A parity encoder 14B, connected to the matrix circuits 13B, 13C, is supplied with the standard audio data SR, the expansion audio data LR and the auxiliary data XR for the right channel, and generates parity data PR from the interleaved data shown in Figure 5, in similar manner to the case of the left channel described above.

The 16-bit data words from the matrix circuits 13A, 13B and 13C and the 16-bit parity words from the parity encoders 14A and 14B are supplied to error correction encoders 15a to 15h, in accordance with the track assignment shown in Figure 5, so that parity words P and Q shown in Figure 3 are separately generated for each of the digital audio signal tracks TD1 to TD8, at the same time that an interleaving operation is performed. When the parity words P and Q are generated for data recorded on the digital audio signal tracks TD3, TD4, TD7 and TD8, offset data is advantageously added to each of the calculations of the parity words P and Q in the above formats M and T, so that the format X can be discriminated at the time of reproduction.

The error correction encoders 15a to 15h are connected to respective modulating circuits 16a to 16h.

In the modulating circuits 16a to 16h, the sync signals shown in Figure 2B are annexed to the 16-word data supplied from the encoders 15a to 15h and the CRCC is also generated by an arithmetic operation and annexed to the data to constitute a block shown in Figure 2A for providing recording signals modulated in accordance with a predetermined modulation rule.

In this case, as for the data for the above digital audio signal tracks TD3, TD4, TD7 and TD8, the sync pattern included in the sync signals may be changed from that shown in Figure 2B, as by using the distance between the transitions of 5.0 T and 4.0 T, or an offset may be afforded in the arithmetic operation for the CRCC to provide for format discrimination at the time of reproduction.

The recording signals supplied from the modulating circuits 16a to 16h are supplied via respective recording amplifiers 17a to 17h to respective recording heads HR1 to HR8 so as to be recorded as the digital audio signals TD1 to TD8 on the magnetic tape MT.

In the above recording circuit 10, no marked time delay is produced when the parity encoders 14A and 14B are constituted by exclusive- OR circuits. However, when the circuit construction is such that a time delay may be produced, timing adjustment circuits may also be provided, if so desired.

In a reproducing circuit 20, shown in Figure 7, signals reproduced from digital audio signal tracks TD1 to TD8 of the magnetic tape MT by reproducing heads HP1 to HP8 are supplied through respective reproducing amplifiers 21a to 21h to respective clock extracting circuits 22a to 22h.

In the clock extracting circuits 22a to 22h, the reproduced signals have their waveforms formed into digital signals which are supplied to respective demodulating circuits 23a to 23h, at the timing of clock pulses extracted from the reproduced signals.

In the demodulating circuits 23a to 23h, block synchronisation is achieved by sync signals shown in Figure 2B.

Supposing that, at the time of recording, the sync pattern shown in Figure 2B is afforded to signals recorded on the digital audio signal tracks TD1, TD2, TD5 and TD6, and the sync pattern modified as described above is afforded to signals recorded on the digital audio signal tracks TD3, TD4, TD7 and TD8, the signals reproduced from the tracks TD1, TD2, TD5 and TD6 are synchronised, whether they are recorded according to the format M, the format T or the format X. However, the signals reproduced from the tracks TD2, TD4, TD7 and TD8 are synchronised only when they are recorded according to the format X, while the signals recorded according to the formats M and T are rejected without being erroneously reproduced to act as noise. On the other hand, signals recorded according to the format X are rejected by the reproducing systems designed for the format M or T.

The signals for which block synchronisation is achieved are subjected to demodulation in reverse manner to the modulating process in the modulating circuits 16a to 16h at the time of recording. For the demodulated signals, error detection is performed with respect to the 16-word data and the block address included in the block on the basis of the CRCC annexed to the block with respect to the modulated signals. In this case, when the offset is added at the recording time in the course of the arithmetic operation of the CRCC, the same offset is added at the time of decoding the CRCC at the demodulating circuits 23a to 23h, so that the signals recorded according to the formats M and T are detected as errors and are rejected. On the other hand, signals recorded according to the format X are rejected by the reproducing systems designed for the format M or T.

The demodulated data from the demodulating circuits 23a to 23h are supplied to respective time base correction circuits (TBC) 24a to 24h.

To the time base correction circuits 24a to 24h, there are supplied only the 16 words of the block of which the block address has been detected by the CRCC as containing no errors in the demodulating circuits 23a to 23h. To the time base correction circuits 24a to 24h, those 16 words which have been detected by the CRCC as containing errors are not supplied and instead error flags are supplied for the respective erroneous words.

From the time base correction circuits 24a to 24h, time base corrected 16-word data of the respective blocks and error flags are supplied to error correction decoders 25a to 25h.

In the error correction decoders 25a to 25h, the error correction codes generated at the error correction encoders 15a to 15h of the recording circuit 10 in the manner shown in Figure 3 are decoded. At this time, the words pointed as being erroneous by the error flags supplied from the time base correction circuits 24a to 24h are corrected to the maximum extent possible.

When an offset is added in the course of the arithmetic operation of the parity words P and a at the recording time as mentioned above, the same offset is added at the decoding time in the above error correction decoders 25a to 25h. Hence, errors cannot be corrected for signals recorded according to the formats M or T. Therefore, should many words be erroneous, these may be rejected at some later stage such as by muting. If it is found by CRCC detection that there is no error, the error correction decoding may be performed without fail so that all words may be regarded as being erroneous and thus rejected.

The words corrected for error by the error correction decoders 25a to 25h and the words not corrected for errors and to which error flags are annexed are transmitted to parity decoders 26A and 26B.

In association with the parity encoders 14A and 14B of the recording circuit 10, the standard audio data SL, the expansion audio data LL and the auxiliary audio data XL for the left channel from the error correction decoders 25a, 25e and 25c and the parity word PL from the error correction decoder 25g are supplied to the parity decoder 26A, while the standard audio data SR, the expansion audio data LR and the auxiliary audio data XR for the right channel from the error correction decoders 25b, 25f and 25d and the parity word PR from the error correction decoder 25h are supplied to the parity decoder 26B.

The parity decoders 26A and 26B perform error correction with respect to the words that are supplied from the error correction decoders 25a to 25h and to which are annexed the error flags. Therefore, the words that are not correctable by the error correction decoders 25a to 25h can sometimes be corrected by the parity decoders 26A and 26B, so that the correction capability as a whole may be improved.

From the parity decoders 26A and 26B, the standard audio data SL for the left channel is entered into a matrix circuit 27A in the same sequence shown in the above Table 2 as the output sequence for the matrix circuit 13A of the recording circuit 10. The standard audio data SR for the right channel is entered into a matrix circuit 27B in the same sequence shown in the above Table 2 as the output sequence for the matrix circuit 13C of the recording circuit 10. Also, the expansion audio data LL, LR and the auxiliary data XL, XR for the left and right channels are entered into a matrix circuit 27C in the same sequence as the output sequence for the matrix circuit 13C of the recording circuit 10.

The result is that the standard audio data SL for the left channel, the standard audio data SR for the right channel and the expansion audio data LL, LR and the auxiliary data XL, XR for the left and right channels, are produced from the matrix circuits 27A, 27B and 27C, respectively, in the same sequence or the same temporary sequence as the output sequence from the mapping circuit 12 of the recording circuit 10, and are then supplied to a mapping circuit 29.

In the mapping circuit 29, the expansion audio data LL and the auxiliary data XL are annexed to the standard audio data SL for the left channel to form a 24-bit unit data DL which is provided at an output terminal 30A, while the expansion audio data LR and the auxiliary data XR are annexed to the standard audio data SR for the right channel to form a 24-bit unit data DR which is provided at an output terminal 30B.

Any erroneous word that has not been corrected even in the parity decoders 26A and 26B can be interpolated by an interpolator (not shown) which is connected to circuit elements before the output terminals 30A and 30B or to the output terminals 30A and 30B. It is however necessary that the auxiliary data be separated from the audio data so that only the audio data will be interpolated.

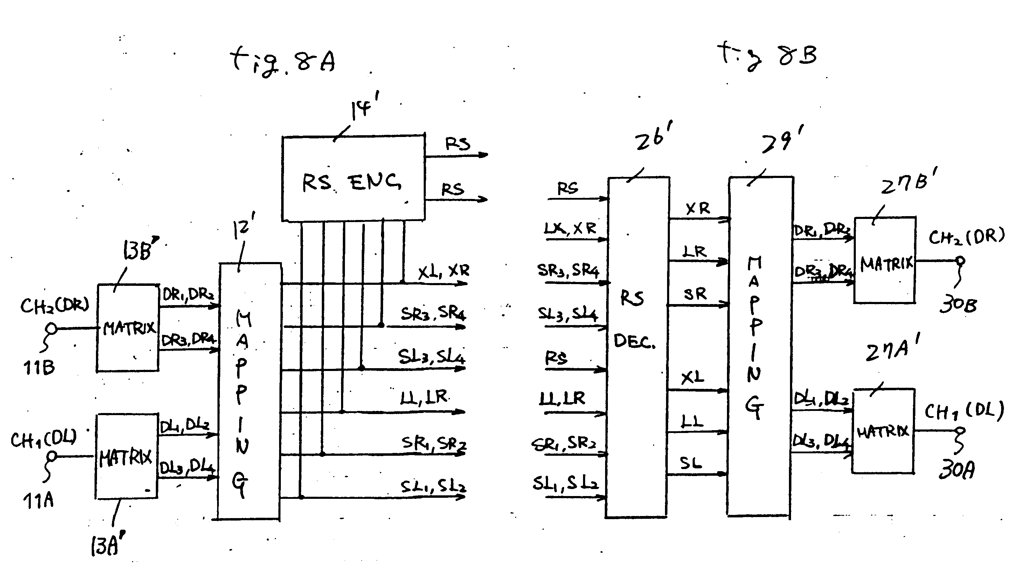

In the recording circuit 10 and the reproducing circuit 20, the mapping circuits 12, 29 and the matrix circuits 13A, 13B, 13C, 27A, 27B and 27C may be reversed in connection order as shown in Figures 8A and 8B so that data distribution as shown in Table 2 or data distribution in reverse manner thereof is performed for the unit data DL and DR remaining intact in matrix circuits 13A′, 13B′, 27A′ and 27B′, and standard data SL, SR, the expansion audio data LL, LR and the auxiliary data XL, XR are separated from or combined together in mapping circuits 12′ and 29′.

Although described as separate circuit elements, the mapping circuit and the matrix circuits can instead be integrated.

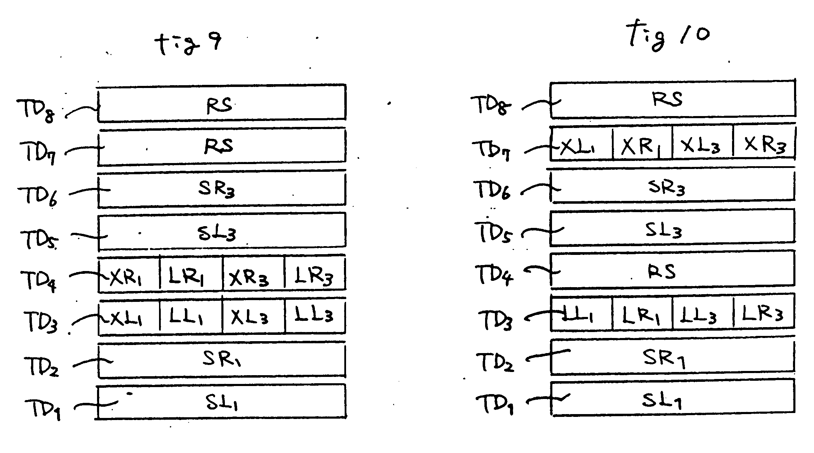

The parity encoders 14A and 14B and the parity decoders 26A and 26B may be replaced by a Reed Solomon code encoder 14′ and a Reed Solomon code decoder 26′ so that the data are not divided into left and right channel data, but the totality of the six data words are supplied at the recording time to the Reed Solomon code encoder 14′ to generate two parity words for recording on digital audio signal tracks TD7 and TD8 as shown in Figure 9, with the six data words and two parity words being supplied at the reproducing time to the Reed Solomon code decoder 26′ for performing error correction. The error correction capability may be improved significantly by making use of the Reed Solomon code.

The manner of track assignment is not limited to the embodiment shown in Figure 5 and, on the condition that the data recorded on the digital audio signal tracks TD1, TD2, TD5 and TD6 remain the same, assignment to the other tracks may be made arbitrarily. For example, as shown in Figure 10, only the expansion audio data LL and LR for the left and right channels may be recorded collectively on the digital audio signal track TD3, with only the auxiliary data XL and XR for the left and right channels being recorded collectively on the digital audio signal track TD7, and with the parity data being recorded on the digital audio signal tracks TD6 and TD8. Although this is not shown, the expansion audio data LL and LR for the left and right channels may be recorded collectively on the digital audio signal track TD3 in the embodiments of Figures 5 or 9, with the auxiliary data XL and XR for the left and right channels being recorded collectively on the digital audio signal track TD4.

For format discrimination, any of the above-described methods may be used singly or in combination. Besides these methods, format discrimination data may be included in the aforementioned control signal and recorded in the control signal track TC.

The channel status (C) or the user information (U) in the so-called AES/EBU digital audio input/output (I/O) format may be recorded as the auxiliary data XL and XR. For example, the above information may be distributed sequentially to only two of the four bits of the auxiliary data XL1, XL2, XL3, XL4 and the same information may be assigned to the remaining two bits of different ones of the auxiliary data, so that the 2 x 2 bit information recorded as the data XL1 and XL3 may be doubly recorded as the data XL7 and XL4, to prevent data loss which might otherwise be caused at the time of splice editing.

## Claims

1. A method of recording digital sampling data words consisting of either m or m+n bits on a recording medium (MT) utilising a multi-track recording format with blocks, whose data words having $\underline{m}$ bits are distributed over the data tracks of the recording medium (MT), the method being characterised by comprising the steps of:

receiving at least one channel of digital data comprising a plurality of sampling data words each having $m$ + $n$ bits;

for each said channel, dividing each said sampling data word into a standard data word (SD) of $m$ upper order bits of said sampling data word and extension data (ED) of $n$ lower order bits of said sampling data word; and

recording said standard data word (SD) independently on at least one track on said recording medium (MT) and said extension data (ED) being grouped in data words of n bits on at least one other track on said recording medium (MT).

2. A method according to claim 1, wherein said data word includes digital audio data.

3. A method according to claim 2, wherein the data word containing said extension data (ED) further includes auxiliary data (XD).

4. A method according to claim 3, wherein said sampling data word comprises one sampling data word of 20 bits, said standard data (SD) comprises 16 upper order bits of said one sampling data word and said extension data (ED) comprises 4 lower order bits of said one sampling data word and said auxiliary data (XD) which has 4 bits.

5. A method according to any one of the preceding claims, wherein said receiving step includes the steps of receiving two channels (CH1, CH2) of digital data.

6. A method of reproducing a digital signal from a recording medium (MT) recorded by a method according to any one of the preceding claims, the reproducing method comprising the steps of:

reproducing said standard data (SD) independently from at least one track on said recording medium (MT) and said extension data (ED) from at least one other track on said recording medium (MT);

combining said standard data (SD) and extension data (ED) into respective data words having $m$ + $n$ bits; and

reconstituting at least one channel of said digital data comprising said sampling data words.

7. A method according to claim 6, wherein each said sampling data word includes digital audio data.

8. A method according to claim 7, wherein said extension data (ED) further includes auxiliary data (XD).

9. A method according to claim 8, wherein said sampling data word comprises one sampling data word of 20 bits, said standard data (SD) comprises 16 upper order bits of said one sampling data word and said extension data (ED) comprises 4 lower order bits of said one sampling data word and said auxiliary data (XD) which has 4 bits.

10. A method according to any one of claims 6 to 9, wherein said reproducing step includes the steps of reproducing two channels of standard data (SD) and two channels of extension data (ED).

## Patentansprüche

1. Verfahren zur Aufzeichnung von digitalen abgetasteten Datenworten, bestehend aus entweder m oder m + n Bits auf einem Aufzeichnungsmedium (MT) unter Verwendung eines Mehrspuraufzeichnungsformates mit Blöcken, dessen Datenworte mit $m$ Bits über die Datenspuren des Aufzeichnungsmediums (MT) verteilt werden, wobei das Verfahren die folgenden Schritte aufweist, **gekennzeichnet durch**:

Empfang wenigstens eines Kanals mit digitalen Daten, der eine Vielzahl von abgetasteten Datenwörtern mit jeweils $m$ + $n$ Bits aufweist;

Unterteilung jedes abgetasteten Datenwortes in ein Standarddatenwort (SD) von $m$ Bits oberer Ordnung des abgetasteten Datenwortes und Erweiterungsdaten (ED) von $n$ Bits unterer Ordnung des abgetasteten Datenwortes für jeden Kanal; und unabhängige Aufzeichnung des besagten Standarddatenwortes (SD) auf zumindest einer Spur auf dem Aufzeichnungsmedium (MT) und gruppieren der Erweiterungsdaten (ED) in Datenworten von n Bits auf zumindest einer anderen Spur auf dem Aufzeichnungsmedium (MT).

**2.** Verfahren nach Anspruch 1, worin das Datenwort digitale Audiodaten beinhaltet.

**3.** Verfahren nach Anspruch 2, worin das die Erweiterungsdaten (ED) enthaltende Datenwort weiterhin Hilfsdaten (XD) enthält.

**4.** Verfahren nach Anspruch 3, worin das abgetastete Datenwort ein abgetastetes Datenwort von 20 Bits enthält, wobei die Standarddaten (SD) 16 Bits oberer Ordnung des einen abgetasteten Datenwortes enthalten und die Erweiterungsdaten (ED) 4 Bits unterer Ordnung des einen abgetasteten Datenwortes enthalten und die Hilfsdaten (XD) 4 Bits haben.

**5.** Verfahren nach von einem der vorhergehenden Ansprüche, worin der Empfangsschritt die Schritte des Empfangs von 2 Kanälen (CH1, CH2) mit digitalen Daten beinhaltet.

**6.** Verfahren zur Wiedergabe digitaler Daten von einem Aufzeichnungsmedium (MT), die durch ein Verfahren entsprechend einem der vorhergehenden Ansprüche aufgezeichnet sind, wobei das Wiedergabeverfahren folgende Schritte enthält:

unabhängige Wiedergabe der Standarddaten (SD) von zumindest einer Spur auf dem Aufzeichnungsmedium (MT) und der Erweiterungsdaten (ED) von zumindest einer anderen Spur auf dem Aufzeichnungsmedium (MT);

Verknüpfung der Standarddaten (SD) und der Erweiterungsdaten (ED) zu entsprechenden Datenworten mit $\underline{m} + \underline{n}$ Bits; und

Wiederherstellung von zumindest einem Kanal der digitalen Daten, die die abgetasteten Datenworte enthalten.

**7.** Verfahren nach Anspruch 6, worin jedes abgetastete Datenwort digitale Audiodaten enthält.

**8.** Verfahren nach Anspruch 7, worin die Erweiterungsdaten (ED) weiterhin Hilfsdaten (XD) enthalten.

**9.** Verfahren nach Anspruch 8, worin ein abgetastetes Datenwort ein abgetastetes Datenwort von 20 Bits enthält, wobei die Standarddaten (SD) 16 Bits oberer Ordnung des einen abgetasteten Datenwortes enthalten und die Erweiterungs daten (ED) 4 Bits unterer Ordnung des einen abgetasteten Datenwortes enthalten und die Hilfsdaten (XD) 4 Bits aufweisen.

**10.** Verfahren nach einem der Ansprüche 6 bis 9, worin der Wiedergabeschritt die Schritte der Wiedergabe von 2 Kanälen der Standarddaten (SD) und von 2 Kanälen der Erweiterungsdaten (ED) enthält.

## Revendications

**1.** Procédé d'enregistrement de mots numériques de données échantillonnées composés soit de m, soit de m+n, éléments binaires sur un support d'enregistrement (MT), utilisant un format d'enregistrement multipiste avec des blocs dont les mots de données ayant m éléments binaires sont répartis sur les pistes de données du support d'enregistrement (MT), le procédé étant caractérisé en ce qu'il comprend les étapes consistant à:

- recevoir au moins une voie de données numériques comprenant une pluralité de mots de données échantillonnées ayant chacun m+n éléments binaires;
- pour chacune desdites voies, diviser chacun desdits mots de données échantillonnées en un mot de données ordinaires (SD) de m éléments binaires de poids fort dudit mot de données échantillonnées et des données d'extension (ED) de n éléments binaires de poids faible dudit mot de données échantillonnées; et
- enregistrer ledit mot de donées ordinaires (SD) et lesdites données d'extension (ED) groupés en mots de données de n éléments binaires sur au moins une autre piste sur ledit support d'enregistrement (MT).

**2.** Procédé selon la revendication 1, dans lequel ledit mot de données comprend des données audio numériques.

**3.** Procédé selon la revendication 2, dans lequel le mot de données contenant lesdites données d'extension (ED) comprend en outre des données auxiliaires (XD).

4. Procédé selon la revendication 3, dans lequel ledit mot de données échantillonnées comprend un mot de données échantillonnées de 20 élément binaires, lesdites données ordinaires (SD) comprennent 16 éléments binaires de poids fort dudit un mot de données échantillonnées et lesdites données d'extension (ED) comprennent 4 éléments binaires de poids faible dudit un mot de données échantillonnées et lesdites données auxiliaires (XD), qui ont 4 éléments binaires.

5. Procédé selon l'une quelconque des revendicaitions précédentes, dans lequel ladite étape de réception comprend les étapes consistant à recevoir deux voies (CH1, CH2) de données numériques.

6. Procédé de reproduction d'un signal numérique à partir d'un support d'enregistrement (MT) enregistré par un procédé selon l'une quelconque des revendications précédentes, le procédé de reproduction comprenant les étapes consistant à:
   - reproduire lesdites données ordinaires (SD) indépendamment à partir d'au moins une piste sur ledit support d'enregistrement (MT) et lesdites données d'extension (ED) à partir d'au moins une piste sur ledit support d'enregistrement (MT);
   - combiner lesdites données ordinaires (SD) et lesdites données d'extension (ED) en mots de données respectifs ayant m+n éléments binaires; et
   - reconstituer au moins une voie desdites données numériques comprenant lesdits mots de données échantillonnées.

7. Procédé selon la revendication 6, dans lequel chacun desdits mots de données échantillonnées comprend des données audio numériques.

8. Procédé selon la revendication 7, dans lequel lesdites données d'extension (ED) comprennent en outre des données auxiliaires (XD).

9. Procédé selon la revendication 8, dans lequel ledit mot de données échantillonnées comprend un mot de données de 20 éléments binaires, lesdites données ordinaires (SD) comprennent 16 éléments binaires de poids fort dudit un mot de données échantillonnées, et lesdites données d'extension (ED) comprennent 4 éléments binaires de poids faible dudit un mot de données échantillonnées et lesdites données auxiliaires (XD), qui ont 4 éléments binaires.

10. Procédé selon l'une quelconque des revendications 6 à 9, dans lequel ladite étape de reproduction comprend les étapes consistant à reproduire deux voies de données ordinaires (SD) et deux voies de données d'extension (ED).

# fig. 1

EP 0 325 477 B1

| TA₁ (ANALOG) | | | | | |
|---|---|---|---|---|---|

| TD₈ (DATA) | BLOCK | BLOCK | BLOCK | BLOCK | |
|---|---|---|---|---|---|
| TD₇ (DATA) | | | | | |
| TD₆ (DATA) | | | | | |
| TD₅ (DATA) | | | | | |
| TC (CONTROL) | SECTOR | | | | |
| TT (TIME CODE) | | | | | |
| TD₄ (DATA) | | | | | |
| TD₃ (DATA) | | | | | |
| TD₂ (DATA) | | | | | |
| TD₁ (DATA) | | | | | |

| TA₂ (ANALOG) | | | | | |
|---|---|---|---|---|---|

MT

| | CRCC |
|---|---|
| | W (1) |
| | W (2 - K×12) |
| | W (5 - D×12) |
| | W (6 - D×12 - K×12) |
| | W (9 - 2D×12) |
| | W (10 - 2D×12 - K×12) |
| | P (1 - 3D×12) |
| | P (2 - 3D×12 - K×12) |
| | Q (1 - 4D×12) |
| | Q (2 - 4D×12 - K×12) |
| | W (3 - 5D×12) |
| | W (4 - 5D×12 - K×12) |
| | W (7 - 6D×12) |
| | W (8 - 6D×12 - K×12) |
| | W (11 - 7D×12) |
| | W (12 - 7D×12 - K×12) |
| | SYNC. WORD |

Fig.2A

SYNC. PATTERN (11 BITS)

Block ADDRESS (2 BITS)

RESERVED (2 BITS)

FLAG (1 BIT)

0.5T  4.5T  4.5T  1.5T

Fig.2B

| F | $B_0$ | $B_2$ | $B_3$ |
|---|---|---|---|
| $F_0$ | | 0 | 0 |
| $F_1$ | | 1 | 0 |
| $F_2$ | | 0 | 1 |
| $F_3$ | | 1 | 1 |

Fig 3

W(11) >
W(7) >
W(3) >
Q(1-4dx12)
P(1)
W(9) >
W(5) >
W(1) >

7d

W(11-7Dx12)
W(7-6Dx12)
W(3-5Dx12)
Q(1-4Dx12)
P(1-3Dx12)
W(9-2Dx12)
W(5-Dx12)
W(1)

7D

K    7D

7d

W(12) >
W(8) >
W(4) >
Q(2-4dx12)
P(2)
W(10) >
W(6) >
W(2) >

W(12-7Dx12-Kx12)
W(8-6Dx12-Kx12)
W(4-5Dx12-Kx12)
Q(2-4Dx12-Kx12)
P(2-3Dx12-Kx12)
W(10-2Dx12-Kx12)
W(6-Dx12-Kx12)
W(2-Kx12)

EP 0 325 477 B1

Fig 4

MSB — MSB — MSB — CLIP LEVEL

16 BITS

20 BITS — SD — LD — XD — ED

24 BITS — SD — LD

Fig 5

| $TD_8$ | $PR_o$ | | | | $PR_e$ | | | |
|---|---|---|---|---|---|---|---|---|
| $TD_7$ | $PL_o$ | | | | $PL_e$ | | | |
| $TD_6$ | $SR_3$ | | | | $SR_4$ | | | |
| $TD_5$ | $SL_3$ | | | | $SL_4$ | | | |
| $TD_4$ | $XR_1$ | $LR_1$ | $XR_3$ | $LR_3$ | $XR_2$ | $LR_2$ | $XR_4$ | $LR_4$ |
| $TD_3$ | $XL_1$ | $LL_1$ | $XL_3$ | $LL_3$ | $XL_2$ | $LL_2$ | $XL_4$ | $LL_4$ |
| $TD_2$ | $SR_1$ | | | | $SR_2$ | | | |
| $TD_1$ | $SL_1$ | | | | $SL_2$ | | | |

Fig. 6

Fig. 8A

Fig. 8B

EP 0 325 477 B1

fig 9

| $TD_8$ | RS |
|---|---|

| $TD_7$ | RS |
|---|---|

| $TD_6$ | $SR_3$ |
|---|---|

| $TD_5$ | $SL_3$ |
|---|---|

| $TD_4$ | $XR_1$ | $LR_1$ | $XR_3$ | $LR_3$ |
|---|---|---|---|---|

| $TD_3$ | $XL_1$ | $LL_1$ | $XL_3$ | $LL_3$ |
|---|---|---|---|---|

| $TD_2$ | $SR_1$ |
|---|---|

| $TD_1$ | $SL_1$ |
|---|---|

fig 10

| $TD_8$ | RS |
|---|---|

| $TD_7$ | $XL_1$ | $XR_1$ | $XL_3$ | $XR_3$ |
|---|---|---|---|---|

| $TD_6$ | $SR_3$ |
|---|---|

| $TD_5$ | $SL_3$ |
|---|---|

| $TD_4$ | RS |
|---|---|

| $TD_3$ | $LL_1$ | $LR_1$ | $LL_3$ | $LR_3$ |
|---|---|---|---|---|

| $TD_2$ | $SR_1$ |
|---|---|

| $TD_1$ | $SL_1$ |
|---|---|